# EUROPÄISCHE PATENTSCHRIFT

(11) **EP 3 757 439 B1**
(45) Veröffentlichungstag und Bekanntmachung des Hinweises auf die Patenterteilung: **10.04.2024**
(21) Anmeldenummer: 20182225.1
(22) Anmeldetag: 25.06.2020
(51) Int. Cl.: F16L 37/00, F16L 25/12, F16L 37/62, B65G 53/56

(54) **VORRICHTUNG ZUM VERBINDEN BENACHBARTER ENDEN ZWEIER VON ZU FÖRDERNDEN GÜTERN DURCHSTRÖMTER ROHRE**
DEVICE FOR CONNECTING ADJACENT ENDS OF TWO PIPES CONTAINING GOODS TO BE CONVEYED
DISPOSITIF DE RACCORDEMENT D'EXTRÉMITÉS VOISINES DE DEUX TUBES TRAVERSÉS PAR DES PRODUITS À TRANSPORTER

(30) Priorität: 27.06.2019 DE 102019004465
(43) Veröffentlichungstag der Anmeldung: 30.12.2020
(73) Patentinhaber: KaMeBa GmbH, 27211 Bassum (DE)
(72) Erfinder: Lammers, Wolfgang, 27243 Harpstedt (DE)
(74) Vertreter: Meissner Bolte Partnerschaft mbB

(56) Entgegenhaltungen:
- CH-A- 406 973
- DE-A1- 1 456 761
- DE-U1- 7 825 611
- FR-A1- 2 659 417

## Beschreibung

Die Erfindung betrifft eine Vorrichtung zum Verbinden benachbarter Enden zweier von mindestens einem zu fördernden Gut durchströmter Rohre gemäß dem Oberbegriff des Anspruchs 1.

Fließfähige Schüttgüter werden auf verschiedene Weise transportiert. Gängige Arten des Transports solcher Güter ist die Strömungsförderung oder Schwerkraftförderung. Dabei werden die Güter von einem Luftstrom oder der Schwerkraft folgend durch Rohre transportiert. Die Förderstrecke wird durch ein Rohrsystem vorgegeben, durch das die zu transportierenden Güter strömen.

Damit die Güter im Verlauf des Rohrsystems zu unterschiedlichen Zielen, beispielsweise Lagersilos, gelangen können, verfügt das Rohrsystem über Abzweigungen bzw. Verzweigungen. Hierbei kann es sich beispielsweise um Weichen oder sogenannte Drehrohrverteiler handeln. Die zu fördernden Güter gelangen über ein feststehendes erstes Rohr zur Weiche, zum Drehrohrverteiler oder dergleichen. Hier ist das erste Rohr mit jeweils dem gewünschten zweiten Rohr verbindbar. Bei einer Weiche können zwei unterschiedliche zweite Rohre dem ersten Rohr alternativ zugeordnet werden. Bei Drehrohrverteilern ist es möglich, dem ersten Rohr mehr als zwei zweite Rohre zuzuordnen, von denen jeweils ein ausgewähltes zweites Rohr mit dem ersten Rohr lösbar verbunden wird, damit das jeweils zu transportierenden Gut durch dieses zweite Rohr strömen kann.

Die Verbindung des ersten Rohrs mit dem zweiten Rohr erfolgt bei Drehrohrverteilern, Weichen oder sonstigen Verteilereinrichtungen temporär mit jeweils einem ausgewählten zweiten Rohr. Diese Verbindung muss unter Abdichtung des Endes des ersten Rohrs zum jeweiligen Anfang des zweiten Rohrs erfolgen.

Aus der DE 78 25 611 U1 ist eine Drehrohrweiche bekannt, die zum wahlweisen Verbinden eines zentralen Rohrs mit wahlweise einem von mehreren um das zentrale Rohr herum angeordnete Verteilerrohre dient. Unter dem zentralen Rohr ist mit einem Drehgelenk ein U-förmiger Rohrkrümmer angeordnet. In der Nähe eines mit dem jeweiligen Verteilerrohr zu verbindenden Endes des Rohrkrümmers ist ein Axialkompensator vorgesehen. Der Axialkompensator trägt ein Rohrstück mit einem Flansch, der eine Dichtung aufweist, die mit einem Flansch des jeweiligen Verteilerrohrs korrespondiert. Das Rohrstück des Rohrkrümmers ist durch mehrere Hubvorrichtungen gegen die Dichtung drückbar oder von der Dichtung wegbewegbar. Hierbei wird der Axialkompensator lediglich auseinandergezogen oder zusammengedrückt.

Die CH 406 973 A offenbart eine Rohrweiche mit einer Anpressdichtung. Bei dieser Rohrweiche ist ein Zufuhrrohr mit einem drehbaren Rohrbogen versehen, dessen Ende alternativ an eines von mehreren weiterführenden Rohren ankoppelbar ist. Zu diesem Zweck ist dem Ende des jeweiligen Rohrbogens eine Dichtvorrichtung zugeordnet, die einen auf einem Rohrstück verschiebbaren Metallring mit einer Dichtung aufweist. Der Metallring mit der Dichtung ist durch ein Kniehebelsystem axial auf dem Rohrstück verschiebbar. Dadurch kann die Dichtung an das jeweilige weiterführende Rohr gedrückt und zum Verdrehen des Rohrbogens entspannt werden.

Aus der FR 2 659 417 A1 ist ein Ringverteiler bekannt, der über einen drehbaren S-förmigen Verbindungskanal mit einem Einlass- und einem Auslassende verfügt. Der Einlass ist über ein Drehlager und eine diesem zugeordnete Dichtung mit einem Hauptrohr verbunden. Am gegenüberliegenden Ende ist der Verbindungskanal lösbar mit einem von mehreren Verteilerkanälen verbindbar. Dazu befindet sich auf dem zum jeweiligen Verteilerkanal weisenden Ende des Verbindungskanals eine axial verschiebliche Hülse, die eine Dichtung trägt. Die Hülse mit der Dichtung ist durch mehrere Federn gegen einen Flansch des jeweiligen Verteilerkanals drückbar.

Schließlich betrifft die DE 14 56 761 A1 einen Drehrohrverteiler, der ein S-förmiges Verteilerrohr zwischen einem Zuführungsstutzen und einem von mehreren Verteilerstutzen aufweist. Das Verteilerrohr ist durch einen Schubtrieb axial verschiebbar. Zum Verbinden des Verteilerrohrs mit dem Verteilerstutzen wird der Schubtrieb so betätigt, dass das Verteilerrohr gegen den Verteilerstutzen gedrückt wird und dabei die Dichtung am zum Verteilerstutzen weisenden Ende des Verteilerrohrs gegen den Verteilerstutzen drückt. Durch eine entgegengesetzte Betätigung des Schubtriebs wird die Dichtung entspannt, um das Verteilerrohr an einen anderen Verteilerstutzen anzukoppeln.

Bei allen vorstehend geschilderten bekannten Drehrohrverteilern sind die Dichtungen nur entlang ihrer Längsmittelachsen beweglich, um sie gegen ein jeweiliges weiterführendes Rohr anzupressen. Vielfach bestehen Lageabweichungen zwischen den zueinandergerichteten Enden des Verteilerrohrs und des jeweiligen weiterführenden Rohrs. Diese können durch die lediglich axial verschiebbaren Dichtungen nicht ausgeglichen werden.

Der Erfindung liegt die Aufgabe zugrunde, eine Vorrichtung zum zuverlässigen automatischen Verbinden benachbarter Enden zweier Rohre zu schaffen, die einfach aufgebaut ist und es ermöglicht, Lageabweichungen der zu verbindenden Rohre untereinander zu kompensieren.

Eine Vorrichtung zur Lösung dieser Aufgabe weist die Merkmale des Anspruchs 1 auf. Demnach ist es vorgesehen, dass die Dichteinrichtung am Ende des ersten Rohrs ein elastisches und/oder flexibles Dichtmittel aufweist. Ein solches Dichtmittel ist zur dichtenden Verbindung mit dem zweiten Rohr, insbesondere seiner Anlagefläche, in Axialrichtung des ersten Rohrs verlängerbar und zum Lösen der Verbindung wieder verkürzbar. Außerdem ist das flexible Dichtmittel in der Lage, Positions- und/oder Fluchtungenauigkeiten zwischen dem ersten und dem zweiten Rohr, insbesondere einer Dichtfläche des Dichtmittels und dem damit korrespondierenden Anlagemittel am Ende des zweiten Rohrs, zu kompensieren. Solche Fluchtungenauigkeiten können ein radialer Versatz zwischen der Dichtfläche des Dichtmittels und dem Anlagemittel, aber auch Anti-Parallelitäten zwischen der Dichtfläche und dem Anlagemittel sein.

Einem zum benachbarten Ende des zweiten Rohrs weisenden Ende des Dichtmittels ist wenigstens eine unflexible ringartige Versteifung zugeordnet. Bevorzugt umgibt diese ringartige Versteifung mindestens eine Begrenzung der Dichtfläche des Dichtmittels. Dadurch wird insbesondere die kreisringförmige Dichtfläche durch die Versteifung gestützt. Das begünstigt das wirksame dichte Verbinden der Rohre und die Möglichkeit zum elastischen, selbsttätigen Ausgleich von Lagetoleranzen zwischen den benachbarten Enden der Rohre.

Der Versteifung sind mehrere Druckmittelzylinder oder ähnliche Linearantriebe, beispielsweise Spindel- oder Zahnstangentriebe, zugeordnet. Diese Linearantriebe, insbesondere Druckmittelzylinder, dienen zur mindestens axialen Veränderung des Abstands der Dichtfläche des elastischen und/oder flexiblen Dichtmittels gegenüber dem Ende des ersten Rohrs und zum Ende des zweiten Rohrs. Die mehreren Druckmittelzylinder oder sonstige Linearantriebe können unabhängig ein- bzw. ausfahrbar sein, zum Ausgleich von Anti-Parallelitäten zwischen der Dichtfläche des Dichtmittels des ersten Rohrs und dem damit korrespondierenden Anlagemittel des zweiten Rohrs. Die Linearantriebe, insbesondere Druckmittelzylinder, sind vorzugsweise drucksensibel oder kraftsensibel steuerbar, indem sie solange betätigt bleiben, bis eine bestimmte Antriebskraft bzw. ein bestimmter Fluiddruck in jedem Druckmittelzylinder erreicht ist. Dadurch ist eine selbsttätige Ausrichtung der Dichtfläche der Dichteinrichtung am unteren Ende des ersten Rohrs relativ zum mit der Dichtfläche korrespondierenden Anlagemittel des zweiten Rohrs gewährleistet.

Die Druckmittelzylinder sind im Bereich des Endes des ersten Rohrs mit demselben stationär bzw. fest verbunden, vorzugsweise mittels Halterungen, die am Endbereich des ersten Rohrs befestigt sind. Dadurch können sich die Druckmittelzylinder oder sonstige Linearantriebe fest am Ende bzw. Endbereich des ersten Rohrs abstützen, um die erforderliche Kraft zum zuverlässigen Abdichten der Dichtfläche der Dichteinrichtung am Ende des ersten Rohrs mit dem Anlagemittel am Ende des zweiten Rohrs herbeizuführen.

Die Kolbenstange des jeweiligen Druckmittelzylinders oder ein bewegliches Teil eines sonstigen Linearantriebs ist gelenkig mit einem zum zweiten Rohr weisenden Ende oder Endbereich, insbesondere einem die Dichtfläche aufweisenden Dichtteil und/oder der Versteifung, insbesondere des Dichtteils, verbunden zur Kompensation von Ausrichtungenauigkeiten, insbesondere radiale Lageabweichung oder Anti-Parallelitäten zwischen der die beiden Rohre verbindenden Dichtfläche des elastischen/flexiblen Dichtmittels am ersten Rohr und den vorzugsweise starren Anlagemittel am zweiten Rohr. Dadurch wird auch bei Positionsungenauigkeiten zwischen den zueinander gerichteten Enden der beiden zu verbindenden Rohren eine zuverlässige Abdichtung, insbesondere luftdichte Abdichtung, zwischen der Dichtfläche und dem Anlagemittel geschaffen, indem sich die Dichtfläche selbsttätig an die Orientierung des Anlagemittels am jeweiligen zweiten Rohr, woran das erste Rohr dichtend anzuschließen ist, anpasst und/oder anschmiegt.

Das flexible und/oder elastische Dichtmittel weist ein die Dichtfläche aufweisendes ringartiges Dichtteil, ein zum Verbinden des Dichtmittels mit einem Endbereich des ersten Rohrs dienenden ringartiges Kragenteil und ein das Dichtteil und das Kragenteil einstückig verbindendes dünnwandiges schlauchartiges Balgteil auf. Es entsteht aus den genannten Bestandteilen ein einstückig aus vorzugsweise Gummi oder einem anderen Elastomer herstellbares elastisches und/oder flexibles Dichtmittel, wobei das Dichtteil und das Kragenteil zur Befestigung der gegenüberliegenden Enden des balgartigen elastischen und/oder flexiblen Dichtmittels mit dem Endbereich des ersten Rohrs und der Versteifung dienen. Das schlauchartige Balgteil ermöglicht ein elastisches Auseinanderziehen und elastisches Zusammenziehen des elastischen und/oder flexiblen Dichtmittels, wobei das Dichtteil und der Kragenteil auch relativ zueinander quer zur Längserstreckung der Rohre gegeneinander verschiebbar sind und das Dichtteil verkippbar ist, sodass es antiparallel zum Kragenteil verläuft.

Die Vorrichtung kann so weitergebildet sein, dass die Dichtfläche des Dichtmittels durch eine elastische axiale Längung des Dichtmittels und/oder eine flexible Neigung des Dichtmittels gegenüber einer Längsmittelachse des ersten Rohrs zur dichtenden Anlage am mit der Dichtfläche korrespondierenden Anlagemittel am Ende des zweiten Rohrs bringbar ist.

Durch die elastische Verformung des Dichtmittels, insbesondere ihrer Dichtfläche, kann ein dichtendes Anpressen der Dichtfläche des Dichtmittels am Ende des ersten Rohrs am Anlagemittel am zur Dichtfläche benachbarten Ende des zweiten Rohrs erfolgen. Dabei kann sich die Dichtfläche so am Anlagemittel anschmiegen, dass Fluchtungenauigkeiten, insbesondere Anti-Parallelitäten oder ein radialer Versatz der benachbarten Enden, automatisch beim Verbinden derselben ausgleichbar sind.

Bevorzugt ist es vorgesehen, das Dichtmittel mindestens der zu verbindenden Rohre mit einem seiner Dichtfläche gegenüberliegenden Ende fest mit dem Ende des ersten Rohrs zu verbinden, vorzugsweise durch Klemmen. Dadurch ist das Dichtmittel fest und vor allem auch luftdicht, mit dem zum zweiten Rohr weisenden Ende des ersten Rohrs verbunden. Ausgehend von dieser festen Verbindung sind das Dichtmittel und/oder die Dichtfläche desselben sowohl elastisch und/oder flexibel längenveränderlich als auch quer bzw. radial bewegbar und in der Neigung veränderlich, was unter allen Umständen zu einer zuverlässigen dichtenden Ankopplung am zweiten Rohr, insbesondere seinem Anlagemittel, führt.

Eine weitere vorteilhafte Ausgestaltungsmöglichkeit der Vorrichtung sieht es vor, ein Ende einer Kolbenstange des oder jedes Druckmittelzylinders oder eines sonstigen Linearantriebs mit der Versteifung des elastischen und/oder flexiblen Dichtmittels, insbesondere im Bereich seiner Dichtfläche, zu verbinden. Dadurch können die im Endbereich des ersten Rohrs vorzugsweise starr befestigten Druckmittelzylinder oder sonstigen Linearantriebe die Versteifung unter elastischer Längung oder Verkürzung des elastischen und/oder flexiblen Dichtmittels vom Ende des ersten Rohrs zur Verbindung mit dem zweiten Rohr wegfahren bzw. zum Lösen der Verbindung zum ersten Rohr hinbewegen.

Bei einer vorteilhaften Ausgestaltung der Vorrichtung ist das flexible und/oder elastische Dichtmittel der Dichteinrichtung balgartig, vorzugsweise faltenbalgartig, ausgebildet. Ein solches Dichtmittel ist durch seine Flexibilität und/oder Elastizität, axial in der Länge veränderlich. Das gilt vor allem für eine faltenbalgartige Ausbildung des Dichtmittels, wo die mindestens eine Falte oder Ausbuchtung der Mantelfläche des Balgs dazu führt, dass die Länge des Dichtmittels bis zum Mehrfachen der Ausgangslänge vergrößerbar ist. Dadurch sind größere Abstände zwischen zueinander gerichteten Enden der zu verbindenden Rohre zuverlässig überbrückbar und eine ausreichende Abdichtung, insbesondere auch luftdichte Abdichtung, herbeiführbar und Lagerungenauigkeiten zwischen den zueinander gerichteten Enden des ersten und zweiten Rohrs flexibel angleichbar.

Ein bevorzugtes Ausführungsbeispiel der Erfindung wird nachfolgend anhand der Zeichnung näher erläutert. In dieser zeigen:
- Fig. 1: eine schematische Darstellung der Vorrichtung in Verbindung mit einem sogenannten Drehrohrverteiler,
- Fig. 2: einen Längsschnitt durch die Vorrichtung vor der Herstellung einer dichten Verbindung zwischen zwei aufeinanderfolgenden Rohren, und
- Fig. 3: eine Ansicht analog zur Fig. 2 nach der Herstellung einer abgedichteten Verbindung der beiden Rohre.

Die Figuren zeigen die erfindungsgemäße Vorrichtung im Zusammenhang mit einem Drehrohrverteiler 10. Mindestens ein solcher Drehrohrverteiler 10 wird in einem

Rohrsystem einer Anlage zur pneumatischen Förderung oder Schwerkraftförderung von rieselförmigen Schüttgütern, beispielsweise Getreidekörner, Kunststoffgranulat oder sonstigen körnigen Produkten, eingesetzt, um das beim Drehrohrverteiler 10 ankommende Fördergut wahlweise einem von mehreren zweiten Rohren, insbesondere mehr als zwei Rohre, zuzuführen. Zu diesem Zweck wird ein erstes Rohr des Drehrohrverteilers 10 temporär mit einem ausgewählten zweiten Rohr des Rohrsystems verbunden. Das Gut wird dann hinter dem Drehrohrverteiler 10 im ausgewählten zweiten Rohr weitertransportiert.

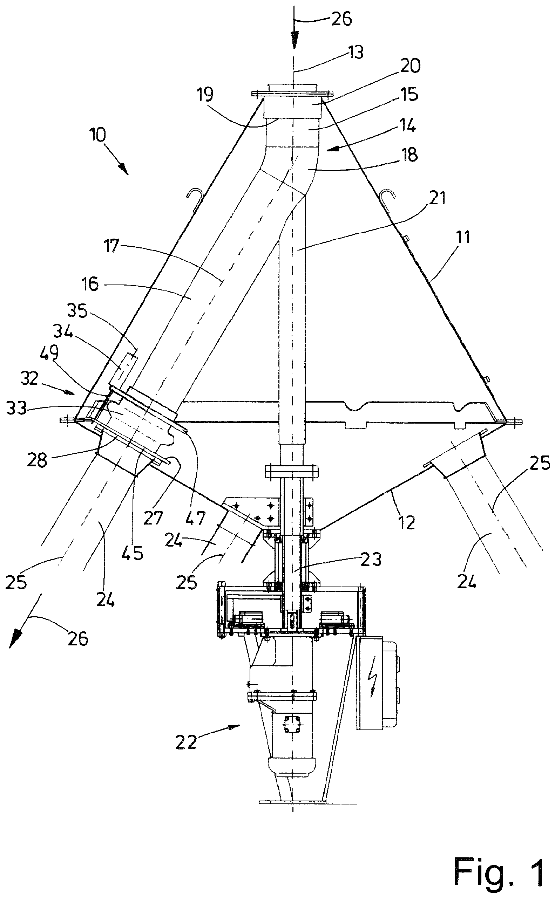

Die Erfindung ist nicht auf den in der Fig. 1 nur beispielhaft gezeigten Drehrohrverteiler 10 beschränkt. Beispielsweise kann die Vorrichtung auch an Weichen zum Einsatz kommen. Der in der Fig. 1 gezeigte Drehrohrverteiler 10 verfügt über ein Gehäuse aus einem oberen Gehäuseteil 11 mit einem kegelstumpfartigen Mantel und einem unteren Gehäuseteil 12 mit einem kegelstumpfartigen Mantel, der flacher ist als der des oberen Gehäuseteils 11. Die Mittelachsen der Kegelstümpfe beider Gehäuseteile 11 und 12 liegen auf einer gemeinsamen (im gezeigten Ausführungsbeispiel vertikalen) Längsmittelachse 13.

Im oberen, höheren Gehäuseteil 11 ist ein erstes Rohr 14 angeordnet. Dieses erstes Rohr 14 verfügt über einen gradlinigen Einlaufabschnitt 15, dessen Mittelachse auf der Längsmittelachse 13 liegt und einen längeren gradlinigen Auslaufabschnitt 16, dessen Längsmittelachse 17 mit Abstand parallel zur kegelstumpfförmigen Mantelfläche des Gehäuseteils 11 verläuft und somit schräg zur Längsmittelachse 13 des Drehrohrverteilers 10 gerichtet ist. Ein unteres Ende des Einlaufabschnitts 15 und ein oberes Ende des Auslaufabschnitts 16 sind über einen Rohrbogen 18 fest miteinander verbunden. Das so gebildete erste Rohr 14 wird am Anfang des Einlaufabschnitts 15 mit dem zu fördernden Gut gespeist. Das Gut verlässt das erste Rohr 14 im Bereich seines unteren Endes 27, dem die erfindungsgemäße Vorrichtung zugeordnet ist.

Das abgewinkelte erste Rohr 14 ist im Gehäuse des Drehrohrverteilers 10 um die mit seinem zentralen Einlaufabschnitt 15 um die Längsmittelachse 13 des Gehäuses drehbar. Dazu ist das obere Ende des Einlaufabschnitts 15 des ersten Rohrs 14 über ein Drehlager 20 am oberen Ende des Gehäuseteils 11 im Drehrohrverteiler 10 drehbar gelagert. Zu diesem Zweck ist das erste Rohr 14 etwa im Bereich unterhalb des Rohrbogens 18 mit einer auf der Längsmittelachse 13 des Drehrohrverteilers 10 liegenden Welle 21 fest verbunden. Weil diese Welle 21 auf der Längsmittelachse 13 liegt, ist dadurch der auf der gleichen Längsmittelachse 13 liegende Einlaufabschnitt 15 des erstens Rohrs 14 auf der Längsmittelachse 13 drehbar.

Unterhalb des unteren (flachen) Gehäuseteils 12 des Drehrohrverteilers 10 ist ein Antrieb 22 ortsfest mit dem Gehäuseteil 12 verbunden. Beim hier gezeigten Antrieb 22 handelt es sich um einen Elektromotor mit einem Untersetzungsgetriebe, dessen Abtriebswelle 23 an das untere Ende der Welle 21 angeflanscht ist.

Dem unteren (flachen) Gehäuseteil 12 sind mehrere, vorzugsweise gleiche zweite Rohre 24 zugeordnet. Die mehreren zweiten Rohre 24 sind vorzugsweise fest mit einer Bodenwandung des Gehäuseteils 12 verbunden, wobei ihre Längsmittelachsen 25 einen gemeinsamen Teilkreis nahe des größten Außendurchmessers des zweiten Gehäuseteils 12 rechtwinklig schneiden. Die Längsmittelachsen 25 sämtlicher zweiter Rohre 24 schneiden an derjenigen Stellen, wo sie an die Bodenwandung des zweiten Gehäuseteils 12 herangeführt sind, die Bodenwandung unter einem rechten Winkel.

Das drehbare erste Rohr 14 des Drehrohrverteilers 10 wird mit einem solchen zweiten Rohr 24 momentan lösbar verbunden, durch dass das im ersten Rohr 14 herangeförderte Gut weitertransportiert werden soll. Dementsprechend verdreht der Antrieb 22 das erste Rohr 14 im Drehrohrverteiler 10 so, dass ein unteres Ende 27 des ersten Rohrs 14 mit einem oberen Ende 28 des ausgewählten zweiten Rohrs 24 zur Deckung gelangt. Idealerweise soll danach eine Längsmittelachse 25 des ausgewählten zweiten Rohrs 24 mit der Längsmittelachse 17 des schrägen Auslaufabschnitts 16 des ersten Rohrs 14 gleichachsig verlaufen, indem die Längsmittelachse 17 des ersten Rohrs 14 von der Längsmittelachse 25 des ausgewählten zweiten Rohrs 24 verlängert wird.

Eine eventuelle Schrägstellung der Längsmittelachsen 17, 25 und/oder ein seitlicher Versatz derselben wird durch das flexible Dichtmittel 33 des Dichtteils 38, vorzugsweise das elastische Balgteil 40 desselben sowie die gelenkige Lagerung der Kolbenstange 49 des jeweiligen Druckmittelzylinders 34 mit dem Dichtmittel 33, vorzugsweise dem Dichtteil 38 des Dichtmittels 33 ausgeglichen. Insbesondere erfolgt dieser Ausgleich derart, dass die Längsmittelachsen 17, 25 der Rohre 14, 24 nach erfolgter Verbindung derselben mit dem Dichtmittel 33 gleichachsig aufeinanderfolgen.

Das gilt auch für diejenigen zweiten Rohre 24, womit gemäß der Darstellung in der Fig. 1 das erste Rohr 14 momentan nicht verbunden ist. Wenn das erste gekrümmte Rohr 14 vom Antrieb 22 im Drehrohrverteiler 10 so gedreht wird, dass das mit einem anderen zweiten Rohr 24 verbunden werden kann, verlängert auch die Längsmittelachse 25 dieses anderen zweiten Rohrs 24 die schräggerichtete Längsmittelachse 17 des Auslaufabschnitts 16 des ersten Rohrs 14.

Das zu transportierende Gut bzw. Produkt gelangt beim in der Fig. 1 gezeigten Drehrohrverteiler 10 von oben in den Einlaufabschnitt 15 des ersten Rohrs 14. Am unteren Ende 27 des schräggerichteten Auslaufabschnitts 16 verlässt das geförderte Gut das erste Rohr 14 des Drehrohrverteilers 10, von wo das Gut in das zweite Rohr 24 gelangt, womit das erste Rohr 14 momentan verbunden ist. Die Strömungsrichtung 26 des zu fördernden Gutes durch das erste Rohr 14 des Drehrohrverteilers 10 und das dieses weiterführende, ausgewählte zweite Rohr 24 ist in der Fig. 1 durch Pfeile dargestellt.

Wenn ein anderes in der Fig. 1 gezeigte zweite Rohr 24 mit zu förderndem Gut, beispielsweise einem anderen Gut, versorgt werden soll, verdreht der Antrieb 22 das erste Rohr 14 um einen entsprechenden Drehwinkel im Drehrohrverteiler 10, wobei der schräge Auslaufabschnitt 16 des ersten Rohrs 14 innerhalb des Drehrohrverteilers 10 auf einem Teil einer kegelförmigen Hüllfläche weiterbewegt wird, bis die Längsmittelachse 17 des schrägen Auslaufabschnitt 16 des ersten Rohrs 14 und die Längsmittelachse 25 des anderen zweiten Rohrs 24 sich treffen, also die Längsmittelachse 17 des Auslaufabschnitts 16 des ersten Rohrs 14 von der Längsmittelachse 25 des zweiten Rohrs 24 in Strömungsrichtung 26 gesehen verlängert wird.

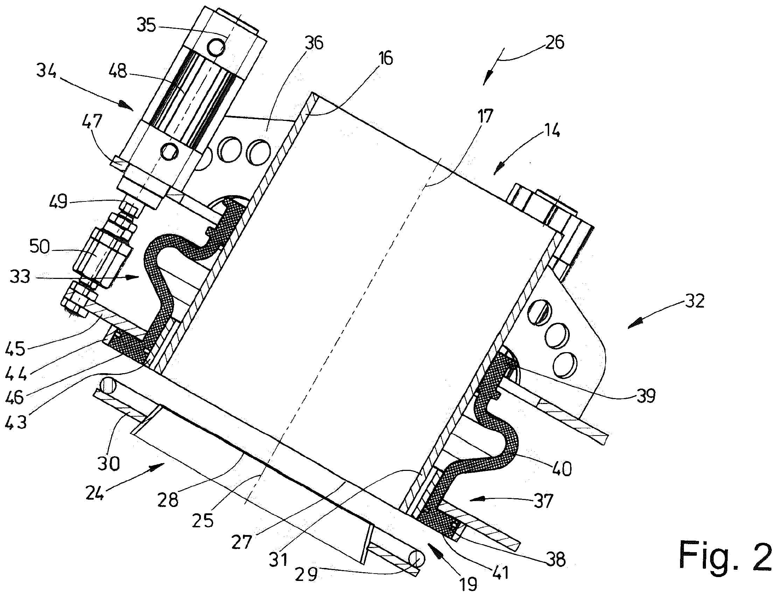

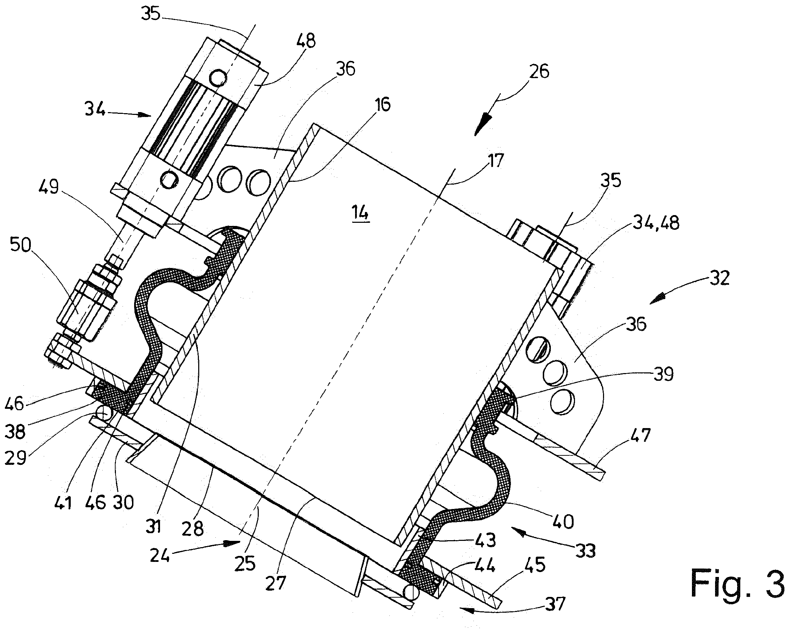

Ein unteres Ende 27 des Auslaufabschnitts 16 des ersten Rohrs 14 und ein oberes Ende des momentan dem ersten Rohr 14 zugeordneten zweiten Rohr 24 liegen sich idealerweise gleichachsig parallel zueinander verlaufend gegenüber. In den Fig. 2 und 3 ist nur ein oberer Teil des jeweiligen zweiten Rohrs 24 dargestellt, und zwar in der Fig. 2 vor der Verbindung mit dem ersten Rohr 14 und in der Fig. 3 nach der Verbindung.

Am oberen Ende 28 jedes zweiten Rohrs 24 befindet sich ein ringförmiges Anlagemittel 29. Im gezeigten Ausführungsbeispiel verfügt das ringartige Anlagemittel 29 über einen kreisförmigen Querschnitt. Es kann jedoch auch andere Querschnitte aufweisen, beispielsweise einen ovalen oder dreieckförmigen Querschnitt. Das Anlagemittel 29 ist auf einer die Längsmittelachse 25 senkrecht schneidenden Ringscheibe 30 befestigt, beispielweise angeschweißt, und zwar so, dass das ringförmige Anlagemittel 29 in Richtung zum unteren Ende 27 des ersten Rohrs 14, nämlich dem Auslaufabschnitt 16 desselben, gegenüber der Ringscheibe 30 nach oben vorsteht. Die Ringscheibe 30 ist wiederum mit dem zweiten Rohr 24 kurz im Bereich seines oberen Endes 28 verbunden, vorzugsweise wiederum durch Schweißen.

Die Fig. 2 und 3 zeigen detailliert die erfindungsgemäße Vorrichtung, die einem vom unteren Ende 27 des Auslaufabschnitts 16 des ersten Rohrs 14 ausgehenden Endbereich 31 des Auslaufabschnitts 16 des ersten Rohrs 14 zugeordnet ist.

Die Vorrichtung verfügt über eine Dichteinrichtung 32 mit einem elastischen und/oder flexiblen Dichtmittel 33, mehrere über den Außenumfang des unteren Bereichs des Auslaufabschnitts 16 des ersten Rohrs 14 verteilt angeordnete, vorzugsweise gleiche, Druckmittelzylinder 34, vorzugsweise Pneumatikzylinder, deren Längsmittelachsen 35 parallel zur Längsmittelachse 25 verlaufen, Halterungen 36 für die Druckmittelzylinder 34 und eine das untere Ende 27 des Auslaufabschnitts 16 des ersten Rohrs 14 mit Abstand umgebende ringartige Versteifung 37.

Das elastische und/oder flexible Dichtmittel 33 verfügt über ein ringartiges Dichtteil 38, ein ringartiges Kragenteil 39 und ein schlauchartiges Balgteil 40 zwischen dem Dichtteil 38 und dem Kragenteil 39. Das ganze elastische und/oder flexible Dichtmittel 33 ist einstückig ausgebildet, indem das Dichtteil 38, das Kragenteil 39 und das zwischen beiden angeordnete Balgteil 40 einstückig miteinander verbunden sind. Dadurch ist das gesamte Dichtmittel 33 einstückig aus Gummi, Elastomer oder einem ähnlichem flexiblen und/oder elastischen Material herstellbar.

Das Balgteil 40 zwischen dem Dichtteil 38 und dem Kragenteil 39 verfügt über einen halbkreisförmigen Querschnitt, wobei die halbkreisförmige Wölbung nach außen gerichtet ist und ringförmig umläuft. Die Enden der halbkreisförmigen Wölbung des Balgteils 40 gehen über in kurze zylindrische Abschnitte, die konzentrisch den vom unteren Ende 27 des ersten Rohrs 14 ausgehenden Endbereich umgeben, wobei der erste obere zylindrische Abschnitt des Balgteils 40 einen Innendurchmesser aufweist, der dem Außendurchmesser des ersten Rohrs 14 entspricht, und der untere längere zylindrische Abschnitt des Balgteils 40 einen Innendurchmesser aufweist, der um etwa 10% bis 20% größer ist als der Außendurchmesser des ersten Rohrs 14.

Das am unteren Ende des zylindrischen Abschnitts des Balgteils 40 angeformte Dichtteil 38 verfügt über einen rechteckigen Querschnitt, dessen lange Seite quer zur Längsmittelachse 17 des ersten Rohrs 14 und auch zur Längsmittelachse 25 des zweiten Rohrs 24 verläuft. Eine Unterseite des Dichtteils 38 bildet eine im Ausgangszustand des Dichtteils 38 ebene, kreisringförmige Dichtfläche 41. Diese Dichtfläche 41 weist zum anderen Ende 28 des zweiten Rohrs 24, insbesondere das ringförmige Anlagemittel 29 am Ende des zweiten Rohrs 24, an das die Dichtfläche 41 bei erfolgter Ankopplung bzw. Ankupplung und Abdichtung des ersten Rohrs 14 und zweiten Rohrs 24 angedrückt wird. Die ringförmige Dichtfläche 41 liegt im Ausgangszustand des elastischen flexiblen Dichtmittels 33 in einer Ebene, die die Längsmittelachse 17 rechtwinklig schneidet und vom Anlagemittel 29 um den Spaltabstand 19 entfernt ist (Fig. 2).

Das am gegenüberliegenden oberen Ende des Balgteils 40 angeformte Kragenteil 39 dient zur Abdichtung und axial unverschieblichen Fixierung des Dichtmittels 33 am Außenumfang des oberen Endbereichs des ersten Rohrs 14. Hierzu kann ein in den Figuren nicht gezeigter Spannring oder ähnliches dienen. Aufgrund dieser Befestigung kann sich das Kragenteil 39 des Dichtmittels 33 nicht gegenüber dem ersten Rohr 14 verschieben und sorgt für eine dichte, insbesondere luftdichte, Verbindung des Dichtmittels 33 mit dem unteren Endbereich des ersten Rohrs 14.

Die Versteifung 37 der Vorrichtung, insbesondere ihrer Dichteinrichtung 32, ist dem zum zweiten Rohr 24 weisenden Ende des Dichtmittels 33 zugeordnet. Im gezeigten Ausführungsmittel ist die Versteifung 37 dem Dichtteil 38 zugeordnet, und zwar so, dass sie das Dichtteil 38 größtenteils umgibt, aber die Dichtfläche 41 vollständig freilässt. Dadurch bekommt die Versteifung 37 die Gestalt einer unten offenen Rinne, die die äußere Umfangsfläche, die innere Umfangsfläche und die der Dichtfläche 41 gegenüberliegende Rückseite des Dichtteils 38 mindestens größtenteils umgibt. Die Versteifung 37 ist starr ausgebildet, indem sie beispielsweise aus Stahl, insbesondere Edelstahl, besteht. Dadurch dient die Versteifung 37 zur Abstützung und Führung des Dichtteils 38 derart, dass sich nur die von der Versteifung 37 freigelassene Dichtfläche 41 des Dichtteils 38 elastisch und/oder flexibel verformen kann zur Herbeiführung einer Abdichtung zum Ende 28 des zweiten Rohrs 24, insbesondere des Anlagemittels 29 am Ende 28 des zweiten Rohrs 24.

Damit die Versteifung 42 einen ringförmigen Durchtritt für den sich am Dichtteil 38 anschließenden Balgteil 40 zulässt, ist die Versteifung 37 aus einer inneren zylindrischen Hülse 43 und einer äußeren, vorzugsweise kürzeren Hülse 44 mit einer Ringscheibe 45 gebildet. Die Hülse 44 ist mit der Unterseite der Ringscheibe 45 fest verbunden, z. B. verschweißt. Die Hülsen 43 und 44 verlaufen beide in der Ausgangsstellung des Dichtmittels 33 konzentrisch zur Längsmittelachse 17. Dabei liegt der Innendurchmesser der Hülse 44 am Außenumfang des Dichtteils 38 an, während der Außenumfang der Hülse 43 an der Innenseite des Dichtteils 38 und einem Stück des unteren zylindrischen Abschnitts des Balgteils 40 anliegt (Fig. 2 und 3). Die Hülsen 43 und 44 sowie gegebenenfalls auch die Ringscheibe 45 der Versteifung 37 sind mit dem Dichtmittel 33, insbesondere dem Dichtteil 38 derselben, verbunden durch Kleben, Anvulkanisieren und/oder formschlüssige Rastvorsprünge 46 an der Außenseite der Hülse 43 und/oder der Innenseite der Hülse 44.

Die im Innendurchmesser verglichen zum Außendurchmesser des ersten Rohrs 14 um 10%-20% größere Hülse 43 der Versteifung 37 ermöglicht eine Bewegung der Dichtfläche 41 quer zur Längsmittelachse 17, um Abweichungen der Längsmittelachse 25 des zweiten Rohrs 24 von der Längsachse 17 des ersten Rohrs 14 ausgleichen zu können, falls die Rohre 14 und 24 dichtend verbunden werden müssen, ohne dass sie exakt fluchten, sich ihre Längsmittelachsen 17 und 25 also nicht genau decken.

Die Vorrichtung, insbesondere Dichteinrichtung 32, weist mehrere, außenseitig um den unteren Endbereich des ersten Rohrs 14 gleichmäßig verteilte Druckmittelzylinder 34 auf, bei denen es sich im gezeigten Ausführungsbeispiel um gleich ausgebildete Pneumatikzylinder handelt. Hierauf ist die Erfindung aber nicht beschränkt. Statt der Pneumatikzylinder können auch andere Linearantriebe, beispielsweise Zahnstangen- oder Spindeltriebe, Verwendung finden.

Ein Kolben 48 des Druckmittelzylinders 34 ist mit einer den unteren Endbereich des ersten Rohrs 14 mit Abstand vom unteren Ende 27 desselben umgebenden Ringscheibe 47 fest verbunden. Die Ringscheibe 47 liegt in einer Ebene, die die Längsmittelachse 17 senkrecht schneidet. Die Ringscheibe 47 ist über mehrere der gleichmäßig über den Außenumfang des Endbereichs des ersten Rohrs 14 verteilten Haltern 36 fest und axial zur Längsmittelachse 17 unverschieblich mit dem Außenumfang des ersten Rohrs 14 verbunden. Die Halter 36 sind beispielsweise mit dem Außenumfang des ersten Rohrs 14 und der Ringscheibe 47 verschweißt. Gebildet sind die Ringscheibe 47 und die Halter 36 aus einem stabilen Material, beispielsweise Metall, insbesondere rostfreiem Stahl.

Die Enden von Kolbenstangen 49 der Druckmittelzylinder 34 sind mit der Ringscheibe 45 der Versteifung 37 des unteren Dichtteils 38 des Dichtmittels 33 indirekt oder alternativ auch direkt verbunden, wodurch die Druckmittelzylinder 34 die ganze Versteifung 37 mit dem Dichtteil 38 unter elastischer Verlängerung des Dichtmittels 33, insbesondere des Balgteils 40 aus der Längsmittelachse 17 hin- und herbewegen können. Im gezeigten Ausführungsbeispiel ist die indirekte Verbindung gelenkig bzw. kardanartig ausgebildet durch mit unteren Enden der Kolbenstangen 49 verbundene gelenkige bzw. flexible Zwischenstücke 50. Die Zwischenstücke 50 verbinden dadurch untere Enden der Kolbenstangen 49 der Druckmittelzylinder 34 mit der Ringscheibe 47.

Die Zwischenstücke 50 können auch Druckaufnehmer aufweisen oder als Druckmessdosen ausgebildet sein, womit die Kraft, mit der die Druckmittelzylinder 34 die Dichtfläche 41 des Dichtteils 38 gegen das Anlagemittel 29 drücken, um die Rohre 14 und 24 dichtend, insbesondere luftdicht, zu verbinden, ermittelbar und begrenzbar ist. Dadurch ist die Dichtkraft zwischen den Rohren 14 und 24 einstellbar und es können bei Anti-Parallelitäten zwischen den zueinander weisenden Enden der Rohre 14 und 24 die Druckmittelzylinder 34 unterschiedlich lange Hübe ausführen, sodass auch bei Anti-Parallelitäten eine umlaufende Abdichtung, insbesondere luftdichte Abdichtung, der benachbarten Enden der Rohre 14 und 24 durch die Vorrichtung, insbesondere ihre Dichteinrichtung 32, herbeiführbar sind.

Die vorstehend beschriebene Vorrichtung arbeitet wie folgt:
Wenn ein Gut vom Drehrohrverteiler 10 mit dem ersten Rohr 14 durch ein bestimmtes zweites Rohr 24 weitertransportiert werden soll, wird zunächst vom Antrieb 22 des Drehrohrverteilers 10 das erste Rohr 14 so um die Längsmittelachse 13 des Drehrohrverteilers 10 verdreht, dass die Längsmittelachse 17 des ersten Rohrs 14 von der Längsmittelachse 25 des ausgewählten zweiten Rohrs 24 verlängert wird. Idealerweise folgt danach auf die Längsmittelachse 17 die Längsmittelachse 25 so, dass beide gleichachsig auf einer gemeinsamen Linie liegen. Das untere Ende 27 des ersten Rohrs 14 und das obere Ende 28 des zweiten Rohrs 24 liegen dann bevorzugt fluchtend mit dem Spaltabstand 19 gegenüber, ohne dass sie dann schon verbunden sind (Fig. 2).

Nachdem die beiden Rohre 14 und 24 wie vorstehend beschrieben so zueinander ausgerichtet sind, dass sie sich verbinden lassen, werden die Druckmittelzylinder 34 oder ähnliche Linearantriebe ausgefahren. Dadurch wird die mit den Druckmittelzylindern 34 verbundene Versteifung 37 mit dem Dichtteil 38 in Strömungsrichtung 26 gesehen zum Ende 28 des zweiten Rohrs 24, und zwar dem dort angeordneten ringartigen Anlagemittel 29, bewegt. Infolge der Verbindung des Dichtteils 38 des Dichtmittels 33 der Dichteinrichtung 32 mit der Versteifung 37 wird durch das Ausfahren der Druckmittelzylinder 34 in Richtung zum zweiten Rohr 24 das Dichtteil 38 von der Versteifung 37 mitbewegt und das schlauchartige Dichtmittel 33 verlängert. Dabei nimmt der Abstand des Dichtteils 38 zum Kragenteil 39 zu und das Balgteil 40 wird elastisch gestreckt.

Die Druckmittelzylinder 34 werden soweit ausgefahren, dass die Dichtfläche 41 der Unterseite des Dichtteils 38 dichtend gegen das Anlagemittel 29 am Ende 28 des zweiten Rohrs 24 gedrückt wird. Der Anpressdruck ist so gewählt, dass eine vorzugsweise luftdichte Abdichtung zwischen den Rohren 14 und 24 zustande kommt (Fig. 3).

Das dichtende Anpassen der Dichtfläche 41 wird dadurch begünstigt, dass das die Dichtfläche 41 aufweisende Dichtteil 38 beim Anpressen an das Anlagemittel 29 des zweiten Rohrs 24 von der Versteifung 37 gestützt und dabei stabilisiert wird.

Eventuelle Fluchtungenauigkeiten zwischen den zueinander weisenden Enden 27 und 28 der zu verbindenden Rohre 14 und 24 werden selbsttätig ausgeglichen durch eine radiale Beweglichkeit der Versteifung 37 mit dem von der Versteifung 37 gehaltenen Dichtteil 38 des Dichtmittels 33 der Dichteinrichtung 32. Diese radiale Beweglichkeit wird dadurch herbeigeführt, dass die innere Hülse 43 der Versteifung 37 einen Innendurchmesser aufweist, der größer ist als der Außendurchmesser des Endbereichs des ersten Rohrs 14 im Bereich der Versteifung 37.

Eine eventuelle Anti-Parallelität der benachbarten Enden 27 und 28 der zu verbindenden Rohre 14 und 24 wird ausgeglichen durch flexible bzw. gelenkige Verbindungen der Druckmittelzylinder 34 mit der Versteifung 37. Dadurch können die Druckmittelzylinder 34 unterschiedlich weit ausgefahren werden zur Anpassung der Versteifung 37 mit dem damit verbundenen Dichtteil 38 des Dichtmittels 33 an die eventuelle Schiefstellung des ringförmigen Anlagemittels 29 am oberen Ende 28 des zweiten Rohrs 24.

Das Lösen der Verbindung der Rohre 14 und 24 erfolgt durch Einfahren der Druckmittelzylinder 34, wodurch die Versteifung 37 mit dem Dichtteil 38 vom oberen Ende 28 des zweiten Rohrs 24 wegbewegt und das schlauch- bzw. balgartige Dichtmittel 33 der Dichteinrichtung 32 wieder verkürzt wird und/oder sich durch seine Elastizität wieder selbsttätig zusammenzieht. Das erste Rohr 14 wird dann vom Antrieb 22 des Drehrohrverteilers 10 zu demjenigen zweiten Rohr 24 verfahren, durch das als nächstes Güter, vorzugsweise andere Güter, transportiert werden sollen. Die Verbindung der Rohre 14 und 24 erfolgt dann wieder genauso wie vorstehend beschrieben.

### Bezugszeichenliste:

| | | | |
|---|---|---|---|
| 10 | Drehrohrverteiler | 43 | Hülse |
| 11 | Gehäuseteil | 44 | Hülse |
| 12 | Gehäuseteil | 45 | Ringscheibe |
| 13 | Längsmittelachse | 46 | Rastvorsprung |
| 14 | erstes Rohr | 47 | Ringscheibe |
| 15 | Einlaufabschnitt | 48 | Kolben |
| 16 | Auslaufabschnitt | 49 | Kolbenstange |
| 17 | Längsmittelachse | 50 | Zwischenstück |
| 18 | Rohrbogen | | |
| 19 | Spaltabstand | | |
| 20 | Drehlager | | |
| 21 | Welle | | |
| 22 | Antrieb | | |
| 23 | Abtriebswelle | | |
| 24 | zweites Rohr | | |
| 25 | Längsmittelachse | | |
| 26 | Strömungsrichtung | | |
| 27 | unteres Ende | | |
| 28 | oberes Ende | | |
| 29 | Anlagemittel | | |
| 30 | Ringscheibe | | |
| 31 | Endbereich | | |
| 32 | Dichteinrichtung | | |
| 33 | Dichtmittel | | |
| 34 | Druckmittelzylinder | | |
| 35 | Längsmittelachse | | |
| 36 | Halterung | | |
| 37 | Versteifung | | |
| 38 | Dichtteil | | |
| 39 | Kragenteil | | |
| 40 | Balgteil | | |
| 41 | Dichtfläche | | |

## Patentansprüche

1. Vorrichtung zum Verbinden benachbarter Enden zweier von mindestens einem zu fördernden Gut durchströmter Rohre (14, 24), mit einer einem ersten Rohr (14) zugeordneten Dichteinrichtung (32), die am Ende des ersten Rohrs (14) ein elastisches und/oder flexibles Dichtmittel (33) aufweist und wenigstens axial beweglich am zum zweiten Rohr (24) gerichteten Ende des ersten Rohres (14) angeordnet ist, und mit einem dem zur Dichteinrichtung (32) des ersten Rohrs (14) weisenden Ende des zweiten Rohrs (24) ortsfest zugeordneten Anlagemittel (29) für die Dichteinrichtung (32) am Ende des ersten Rohrs (14), wobei mindestens einer Begrenzung eines eine Dichtfläche (41) aufweisenden Dichtteils (38) des Dichtmittels (33) wenigstens eine Versteifung (37) zugeordnet ist, der Versteifung (37) mehrere Druckmittelzylinder (34) oder sonstige Linearantriebe zur mindestens axialen Veränderung des Abstands der Dichtfläche (41) zum Ende des ersten Rohres (14) zugeordnet sind, eine Kolbenstange (49) des jeweiligen Druckmittelzylinders (34) oder ein bewegliches Teil eines sonstigen Linearantriebs gelenkig mit einem zum zweiten Rohr (24) weisenden Ende oder Endbereich der Versteifung (37) verbunden ist zur Kompensation von Ausrichtungenauigkeiten, wie radiale Lageabweichung oder Anti-Parallelitäten, zwischen der die beiden Rohre (14, 24) verbindenden Dichtfläche (41) des elastischen und/oder flexiblen Dichtmittels (33) am ersten Rohr (14) und dem Anlagemittel (29) am zweiten Rohr (24), **dadurch gekennzeichnet, dass** das flexible und/oder elastische Dichtmittel (33) ein die Dichtfläche (41) aufweisendes ringartiges Dichtteil (38), ein zum Verbinden des Dichtmittels (33) mit einem vom zum zweiten Rohr (24) weisenden Ende des ersten Rohrs (14) ausgehenden Endbereich desselben dienendes Kragenteil (39) sowie ein das Dichtteil (38) mit dem Kragenteil (39) einstückig verbindendes schlauchartiges Balgteil (40) aufweist.

2. Vorrichtung nach Anspruch 1, **dadurch gekennzeichnet, dass** das Dichtmittel (33) über die zum Ende des zweiten Rohrs (24) weisende Dichtfläche (41) verfügt, die integraler Bestandteil des Dichtmittels (33) ist und die zur dichtenden Anlage am Anlagemittel (29) am Ende des zweiten Rohrs (24) bringbar ist, indem sie durch Linearantriebe gegen das Ende des zweiten Rohrs (24) bewegbar ist.

3. Vorrichtung nach Anspruch 1 oder 2, **dadurch gekennzeichnet, dass** das Dichtmittel (33) mit einem seiner Dichtfläche (41) gegenüberliegenden Ende fest mit einem Endbereich des ersten Rohrs (14) verbunden ist, vorzugsweise klemmend.

4. Vorrichtung nach Anspruch 1, **dadurch gekennzeichnet, dass** die Druckmittelzylinder (34) oder dergleichen im Endbereich des ersten Rohrs (14) mit demselben verbunden sind, vorzugsweise über mit dem genannten Endbereich fest verbundene Halter (36).

5. Vorrichtung nach Anspruch 4, **dadurch gekennzeichnet, dass** ein Ende der Kolbenstange (49) jedes Druckmittelzylinders (34) direkt oder indirekt mit der Versteifung (37) des Dichtteils (38) verbunden ist.

6. Vorrichtung nach Anspruch 5, **dadurch gekennzeichnet, dass** das Ende der Kolbenstange (49) des jeweiligen Druckmittelzylinders (34) gelenkig mit der Versteifung (37) verbunden ist zur Kompensation von Lageabweichungen, vorzugsweise Fluchtungenauigkeiten, Schrägstellungen und/ oder radiale Versätze zwischen den benachbarten Enden der zu verbindenden Rohre (14, 24).

7. Vorrichtung nach einem der vorhergehenden Ansprüche, **dadurch gekennzeichnet, dass** das flexible und/oder elastische Dichtmittel (33) der Dichteinrichtung (32) balgartig, vorzugsweise faltenbalgartig, ausgebildet ist.

## Claims

1. Device for connecting adjacent ends of two pipes (14, 24) through which at least one product to be delivered flows, with a sealing device (32) which is assigned to a first pipe (14) and, at the end of the first pipe (14), has an elastic and/or flexible sealant (33) and is arranged at least axially movably at that end of the first pipe (14) which is directed towards the second pipe (24), and with an abutment means (29) for the sealing device (32) at the end of the first pipe (14), the abutment means being assigned in a fixed position to that end of the second pipe (24) which faces the sealing device (32) of the first pipe (14), wherein at least one boundary of a sealing part (38), which has a sealing surface (41), of the sealant (33) is assigned at least one reinforcement (37), the reinforcement (37) is assigned a plurality of pressure medium cylinders (34) or other linear drives for at least axially changing the distance of the sealing surface (41) with respect to the end of the first pipe (14), a piston rod (49) of the respective pressure medium cylinder (34) or a movable part of another linear drive is connected in an articulated manner to an end or end region of the reinforcement (37), which end or end region faces the second pipe (24), in order to compensate for orientation inaccuracies, such as a radial position deviation or anti-parallelisms, between the sealing surface (41), which connects the two pipes (14, 24), of the elastic and/or flexible sealant (33) on the first pipe (14) and the abutment means (29) on the second pipe (24), **characterized in that** the flexible and/or elastic sealant (33) has a ring-like sealing part (38) having the sealing surface (41), a collar part (39) serving for connecting the sealant (33) to an end region of the first pipe, starting from that end of the first pipe (14) which faces the second pipe (24), and a tube-like bellows part (40) integrally connecting the sealing part (38) to the collar part (39).

2. Device according to Claim 1, **characterized in that** the sealant (33) has the sealing surface (41) which faces the end of the second pipe (24), is an integral part of the sealant (33) and can be brought into sealing contact with the abutment means (29) at the end of the second pipe (24) by being movable towards the end of the second pipe (24) by linear drives.

3. Device according to Claim 1 or 2, **characterized in that** the sealant (33) is fixedly connected, preferably in a clamping manner, at an end opposite its sealing surface (41) to an end region of the first pipe (14).

4. Device according to Claim 1, **characterized in that** the pressure medium cylinders (34) or the like are connected in the end region of the first pipe (14) to the latter, preferably via holders (36) connected fixedly to said end region.

5. Device according to Claim 4, **characterized in that** one end of the piston rod (49) of each pressure medium cylinder (34) is connected directly or indirectly to the reinforcement (37) of the sealing part (38).

6. Device according to Claim 5, **characterized in that** the end of the piston rod (49) of the respective pressure medium cylinder (34) is connected in an articulated manner to the reinforcement (37) in order to compensate for position deviations, preferably alignment inaccuracies, inclinations and/or radial offsets between the adjacent ends of the pipes (14, 24) to be connected.

7. Device according to one of the preceding claims, **characterized in that** the flexible and/or elastic sealant (33) of the sealing device (32) is formed in the manner of a bellows, preferably in the manner of a folding bellows.

## Revendications

1. Dispositif pour relier des extrémités voisines de deux tubes (14, 24) traversés par au moins un produit à transporter, avec un appareil d'étanchéité (32) associé à un premier tube (14), qui présente à l'extrémité du premier tube (14) un moyen d'étanchéité (33) élastique et/ou flexible et qui est agencé de manière mobile au moins axialement à l'extrémité du premier tube (14) dirigée vers le deuxième tube (24), et avec un moyen d'application (29) pour l'appareil d'étanchéité (32) à l'extrémité du premier tube (14), associé de manière fixe à l'extrémité du deuxième tube (24) orientée vers l'appareil d'étanchéité (32) du premier tube (14), au moins un renforcement (37) étant associé à au moins une délimitation d'une partie d'étanchéité (38), présentant une surface d'étanchéité (41), du moyen d'étanchéité (33), plusieurs vérins à fluide sous pression (34) ou autres entraînements linéaires étant associés au renforcement (37) pour modifier au moins axialement la distance de la surface d'étanchéité (41) par rapport à l'extrémité du premier tube (14), une tige de piston (49) du vérin à fluide sous pression (34) respectif ou une partie mobile d'un autre entraînement linéaire étant reliée de manière articulée à une extrémité ou à une zone d'extrémité du renforcement (37) orientée vers le deuxième tube (24) pour compenser des imprécisions de direction, telles qu'un écart de position radial ou des antiparallélismes, entre la surface d'étanchéité (41), reliant les deux tubes (14, 24), du moyen d'étanchéité élastique et/ou flexible (33) sur le premier tube (14) et le moyen d'application (29) sur le deuxième tube (24), **caractérisé en ce que** le moyen d'étanchéité flexible et/ou élastique (33) présente une partie d'étanchéité (38) à la manière d'un anneau présentant la surface d'étanchéité (41), une partie de collerette (39) servant à relier le moyen d'étanchéité (33) à une zone d'extrémité du premier tube (14) partant de l'extrémité de celui-ci orientée vers le deuxième tube (24), ainsi qu'une partie de soufflet (40) à la manière d'un tuyau reliant d'un seul tenant la partie d'étanchéité (38) à la partie de collerette (39).

2. Dispositif selon la revendication 1, **caractérisé en ce que** le moyen d'étanchéité (33) dispose de la surface d'étanchéité (41) orientée vers l'extrémité du deuxième tube (24), qui fait partie intégrante du moyen d'étanchéité (33) et qui peut être amenée en application étanche sur le moyen d'application (29) à l'extrémité du deuxième tube (24), en étant déplacée par des entraînements linéaires contre l'extrémité du deuxième tube (24).

3. Dispositif selon la revendication 1 ou 2, **caractérisé en ce que** le moyen d'étanchéité (33) est relié de manière fixe, de préférence par serrage, avec une zone d'extrémité du premier tube (14) par une extrémité opposée à sa surface d'étanchéité (41).

4. Dispositif selon la revendication 1, **caractérisé en ce que** les vérins à fluide sous pression (34) ou analogues sont reliés au premier tube (14) dans la zone d'extrémité de celui-ci, de préférence par l'intermédiaire de supports (36) reliés de manière fixe à ladite zone d'extrémité.

5. Dispositif selon la revendication 4, **caractérisé en ce qu'**une extrémité de la tige de piston (49) de chaque vérin à fluide sous pression (34) est reliée directement ou indirectement au renforcement (37) de la partie d'étanchéité (38).

6. Dispositif selon la revendication 5, **caractérisé en ce que** l'extrémité de la tige de piston (49) du vérin à fluide sous pression (34) respectif est reliée de manière articulée au renforcement (37) pour compenser les écarts de position, de préférence les imprécisions d'alignement, les positions inclinées et/ou les décalages radiaux entre les extrémités voisines des tubes (14, 24) à relier.

7. Dispositif selon l'une quelconque des revendications précédentes, **caractérisé en ce que** le moyen d'étanchéité flexible et/ou élastique (33) de l'appareil d'étanchéité (32) est réalisé à la manière d'un soufflet, de préférence à la manière d'un soufflet plié.
